# EUROPEAN PATENT APPLICATION

(11) **EP 4 836 511 A1**
(43) Date of publication of application: **04.11.2026**
(21) Application number: 24914811.5
(22) Date of filing: 07.08.2024
(51) Int. Cl.: H04W 28/02

(54) **METHOD FOR MAPPING AND FORWARDING PACKET SERVICE TO TDM SERVICE LAYER**

(30) Priority: 05.01.2024 CN 202410026837
(71) Applicant: ZTE CORPORATION, Shenzhen, Guangdong 518057 (CN)
(72) Inventor: YANG, Sanwei, Shenzhen, Guangdong 518057 (CN)
(74) Representative: Cristinelli, Luca
(86) International application number: PCT/CN2024/110453
(87) International publication number: WO 2025/145589

(57) **Abstract**

Provided is a method for mapping and forwarding a packet service to a TDM service layer, the method includes: constructing a service mapping and forwarding table between packet service identifiers and TDM connection identifiers in a TDM network, wherein each of the TDM connection identifiers indicates a connection path between a source network node and a destination network node in the TDM network; when a packet service accesses the TDM network, mapping the packet service to a TDM service layer of the TDM network according to the service mapping and forwarding table, and forwarding the packet service via the connection path between the source network node and the destination network node. The present disclosure solves the problem in the related art that L2/L3 layer information of packet services cannot be mapped and forwarded to the TDM service layer, and achieves the effects of simplifying network hierarchy and improving the bearing efficiency of TDM pipes for packet services.

## Description

### Cross-Reference to Related Application

The present disclosure claims the priority to Chinese Patent Application CN202410026837.7, filed on 5 January 2024 and entitled "Method for Mapping and Forwarding Packet Service to TDM Service Layer", the disclosure of which is incorporated herein by reference in its entirety.

### Technical Field

Embodiments of the present disclosure relate to the field of communications, and in particular, to a method for mapping and forwarding a packet service to a TDM service layer.

### Background

Packet services, which are carried over L2VPN/L3VPN and based on statistical multiplexing, often experience over-subscription. As a result, service flows require buffering, queuing, and other processing, leading to uncertainty of actual latency of the services. With the advent of the computing power era, for high-quality services, customers require a Time Division Multiplexing (TDM) service layer to carry packet services, ensuring characteristics such as hard isolation of services, deterministic latency, and on-demand bandwidth. A common practice is that packet services are encapsulated and scheduled by L2VPN/L3VPN and then carried on the TDM service layer. That is, the TDM service layer only provides rigid physical layer (L1) pipes and cannot perform scheduling on the basis of L2/L3 layer information of packet services, so customers cannot directly use the TDM service layer.

### Summary

Embodiments of the present disclosure provide a method for mapping and forwarding a packet service to a TDM service layer, so as to at least solve the problem in the related art that information of an L2/L3 layer of a packet service cannot be mapped and forwarded to a TDM service layer.

According to an embodiment of the present disclosure, provided is a method for mapping and forwarding a packet service to a TDM service layer, the method includes: constructing a service mapping and forwarding table between packet service identifiers and TDM connection identifiers in a time division multiplexing (TDM) network, wherein each of the TDM connection identifiers indicates a connection path between a source network node and a destination network node in the TDM network; and when a packet service accesses the TDM network, mapping the packet service to a TDM service layer of the TDM network according to the service mapping and forwarding table, and forwarding the packet service via the connection path between the source network node and the destination network node.

According to another embodiment of the present disclosure, further provided is a computer-readable storage medium storing a computer program therein, wherein the computer program is configured to implement, when executed, steps in any one of the described method embodiments.

According to yet another embodiment of the present disclosure, further provided is an electronic device, including a memory and a processor; the memory stores a computer program therein, and the processor is configured to execute the computer program to implement steps in any one of the described method embodiments.

### Brief Description of the Drawings

FIG. 1 is a hardware structure block diagram of a computer terminal in a method for mapping and forwarding a packet service to a TDM service layer according to an embodiment of the present disclosure;
FIG. 2 is a diagram of an operating network architecture of mapping and forwarding of a packet service to a TDM service layer according to an embodiment of the present disclosure;
FIG. 3 is a flowchart of a method for mapping and forwarding a packet service to a TDM service layer according to an embodiment of the present disclosure;
FIG. 4 is a schematic flowchart of global topology management according to a scenario embodiment of the present disclosure;
FIG. 5 is a schematic flowchart of a user service request according to a scenario embodiment of the present disclosure;
FIG. 6 is a schematic flowchart of a first method for generating a service mapping and forwarding table according to a scenario embodiment of the present disclosure; and
FIG. 7 is a schematic flowchart of a second method for generating a service mapping and forwarding table according to a scenario embodiment of the present disclosure.

### Detailed Description of the Embodiments

The embodiments of the present disclosure will be described in detail with reference to the accompanying drawings and in conjunction with the embodiments.

It should be noted that, the terms "first", "second" etc. in the description, claims, and accompanying drawings of the present disclosure are used to distinguish similar objects, and are not necessarily used to describe a specific sequence or order.

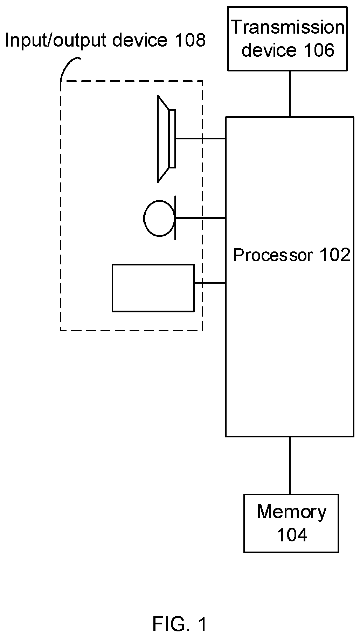

Method embodiments provided in the embodiments of the present disclosure may be executed in a mobile terminal, a computer terminal, or similar computing devices. By taking an example in which the method is executed on a computer terminal, FIG. 1 is a hardware structure block diagram of a computer terminal in a method for mapping and forwarding a packet service to a TDM service layer according to an embodiment of the present disclosure. As shown in FIG. 1, the computer terminal may include one or more (only one processor is shown in FIG. 1) processors 102 (the processor 102 may include, but is not limited to, a microprocessor MCU or a processing device such as a programmable logic device FPGA) and a memory 104 configured to store data, wherein the computer terminal can further include a transmission device 106 for a communication function and an input/output device 108. Those ordinarily skilled in the art can appreciate that the structure shown in FIG. 1 is for illustrative purposes only, but does not limit the structure of the computer terminal. For example, the computer terminal may also include more or fewer components than those shown in FIG. 1, or have different configurations from that shown in FIG. 1.

The memory 104 may be configured to store a computer program, for example, a software program and a module of application software, such as a computer program corresponding to the method for mapping and forwarding a packet service to a TDM service layer in the embodiments of the present disclosure. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage devices, flash memories, or other non-transitory solid-state memories. In some examples, the memory 104 may further include a memory remotely located from the processor 102, and the remote memory may be connected with the computer terminal via a network. Examples of the network above include, but are not limited to, the Internet, an intranet, a local area network, a mobile communication network, and combinations thereof.

The transmission device 106 is configured to receive or transmit data via a network. Specific examples of the network may include a wireless network provided by a communication provider of the computer terminal. In an example, the transmission device 106 includes a network interface controller (NIC) that may be connected with other network devices by a base station, so as to communicate with the Internet. In an example, the transmission device 106 may be a radio frequency (RF) module for communicating with the Internet in a wireless manner.

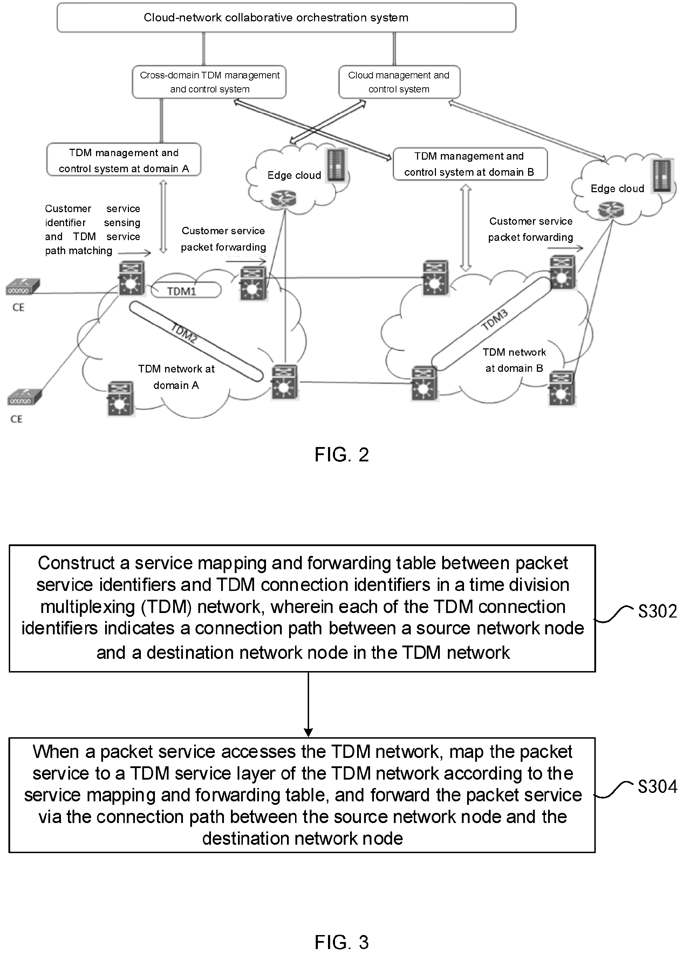

The embodiments of the present disclosure may be operated on the network architecture shown in FIG. 2. FIG. 2 is a diagram of an operating network architecture of mapping and forwarding of a packet service to a TDM service layer according to an embodiment of the present disclosure, As shown in FIG. 2, the network architecture includes: a cloud-network collaborative orchestration system, a cross-domain TDM management and control system, a cloud management and control system, a TDM management and control system in domain A, a TDM management and control system in domain B, an edge cloud, a regional cloud, a TDM network in domain A, and a TDM network in domain B.

Currently, the technologies capable of supporting the mapping of packet services to the TDM service layer include: the Metro Transport Network (MTN) or Fine Grain Metro Transport Network (fgMTN), or Fine Grain Optical Transport Network (fgOTN), or the Idle Mapping Procedure (IMP) mapping of the Optical Service Unit (OSU), or the GFP-F mapping of the Generic Framing Procedure (GFP) for the Optical Data Unit (ODU), or the like. The management and control systems or protocols of each domain (including the TDM management and control system of domain A and the TDM management and control system of domain B) collect topological information in the domains. A cross-domain management and control system or protocol (a cross-domain TDM management and control system) collects topological information between domains, and can also manually configure topological information. After a user purchases a service from an operator, the cloud-network collaborative orchestration system requests the cloud management and control system to allocate cloud pool resources according to the service indicators, so as to obtain the service information and geographic location information of the cloud pool, and returns the service information of the allocated cloud pool resources to the user, allowing the user to complete the relevant configuration. The cloud-network collaborative orchestration system determines the ingress and egress of the TDM network based on the location information of the user and the location information of the cloud resource, and then, according to the purchased service, activates the sensing capability of the TDM network device interface to customer service-related identification information. In the network architecture system described above, the collection of topology/routing resources can be performed using distributed protocols such as IS-IS-TE, OSPF-TE, and MP-BGP for flooding, or can be reported centrally by means of protocols such as BGP-LS, PCEP-LS and NETCONF, and the topology is then calculated by the management and control system.

The present embodiment provides a method running on the described computer terminal or network architecture. FIG. 3 is a flowchart of a method for mapping and forwarding a packet service to a TDM service layer according to an embodiment of the present disclosure. As shown in FIG. 3, the flow includes the following steps:
Step S302: construct a service mapping and forwarding table between packet service identifiers and TDM connection identifiers in a time division multiplexing (TDM) network, wherein each of the TDM connection identifiers indicates a connection path between a source network node and a destination network node in the TDM network.

In an exemplary embodiment, the constructing a service mapping and forwarding table between packet service identifiers and TDM connection identifiers in a time division multiplexing network includes: establishing a matching relationship between the source network node and the destination network node; and obtaining the connection path according to the matching relationship to construct the service mapping and forwarding table.

In actual implementation, the edge node of the TDM network collects the identifiers of the accessed packet services, or allocates packet service identifiers by means of pre-configuration; then, by means of a centralized or distributed protocol, completes the matching of packet service identifiers between the source network node and the destination network node; and based on the matching relationship, calculates a TDM connection path, thereby obtaining the service mapping and forwarding table.

In an exemplary embodiment, the establishing a matching relationship between the source network node and the destination network node includes: determining the source network node and the destination network node according to the packet service identifiers of the source network node and the destination network node.

The packet service identifiers of the source network node and the destination network node are the identification information of the packet services transmitted by the source network node and the destination network node.

In actual implementation, the generation of the service mapping and forwarding table can be carried out in different ways. The service mapping and forwarding table can be calculated and generated according to the source and destination address information in the service flow. As described above, the TDM management and control system determines the source network node and the destination network node of the network connection according to the identification information reported in the customer service flow, thereby determining the TDM device identifiers and customer service identifier information in the customer service mapping and forwarding table.

In an exemplary embodiment, the establishing a matching relationship between the source network node and the destination network node further includes: determining the source network node and the destination network node according to geographic location information where the information of the packet service is located, and TDM network topology information.

In the actual implementation process, the service mapping and forwarding table can be generated in different ways. The service mapping and forwarding table can be computed and generated according to the purchased service information. As described above, the customer service identifier in the customer service mapping and forwarding table is determined according to the service purchased by the user. According to the geographic location information where the customer service is located, and network topology information, the source and destination of the network connection, i.e., the TDM device identifiers in the customer service mapping and forwarding table, are determined. The cross-domain TDM management and control system sends the split source network node and destination network node and Service Level Agreement (SLA) information to the TDM management and control systems of each domain to request connection path computation, and then performs path splicing to determine the connection identifier in the customer service mapping and forwarding table, thereby forming a complete customer service mapping and forwarding table.

In practical implementation, the service mapping and forwarding table may also be completely and manually generated.

In an exemplary embodiment, the service mapping and forwarding table includes at least one of the following: identifiers of a TDM network device; the TDM connection identifiers; the packet service identifiers.

In an exemplary embodiment, the identifiers of the TDM network device includes at least one of the following: a network node identifier; a port identifier of the TDM network device; a sub-port identifier of the TDM network device; and a virtual routing and forwarding (VRF) identifier of the TDM network device.

In an exemplary embodiment, the packet service identifiers at least includes one of the following: a server virtual local area network (SVLAN) identifier; a customer virtual local area network (CVLAN) identifier; a source/destination media access control (MAC) identifier; a source/destination Internet protocol (IP) identifier; a transmission control protocol (TCP) port identifier; and a user datagram protocol (UDP) port identifier.

Step S304: when a packet service accesses the TDM network, map the packet service to a TDM service layer of the TDM network according to the service mapping and forwarding table, and forward the packet service via the connection path between the source network node and the destination network node.

In one exemplary embodiment, the mapping the packet service to a TDM service layer of the TDM network according to the service mapping and forwarding table, and forwarding the packet service via the connection path between the source network node and the destination network node includes: identifying, the source network node of the TDM network, the packet service identifiers, mapping the packet service with a specific identifier to the TDM service layer according to the service mapping and forwarding table, and forwarding the packet service to the destination network node via the connection path between the source network node and the destination network node.

In an exemplary embodiment, after step S304, the method further includes: forwarding, by the destination network node, the packet service to a device with a specific identifier according to the service mapping and forwarding table.

In actual implementation, when a packet service accesses the TDM network, the source network node identifies the packet service identifier, and maps the packet service with the specific identifier to the TDM service layer according to the service mapping and forwarding table. After accessing the TDM connection, at the destination network node, the packet service with the specific identifier is demapped according to the service mapping and forwarding table, and is forwarded to the port with the specific identifier.

In an exemplary embodiment, the mapping the packet service to a TDM service layer of the TDM network according to the service mapping and forwarding table, and forwarding the packet service via the connection path between the source network node and the destination network node further includes: in a case where the connection path indicated by a TDM connection identifier exists, adjusting a connection bandwidth of the TDM network according to a service level agreement (SLA) of the packet service; and in a case where the connection path indicated by the TDM connection identifier does not exist, constructing a TDM connection path by configuring nodes of the TDM network.

By means of the described steps, a method for mapping and forwarding a packet service to a TDM service layer is provided, by constructing a service mapping and forwarding table between packet service identifiers and TDM connection identifiers in a time division multiplexing (TDM) network, wherein the TDM connection identifiers indicate a connection path between a source network node and a destination network node in the TDM network; and when a packet service accesses the TDM network, the packet service is mapped to a TDM service layer of the TDM network according to the service mapping and forwarding table, and the packet service is forwarded via the connection path between the source network node and the destination network node. In this way, it may be possible to solve the problem in the related art that L2/L3 layer information of the packet service cannot be mapped and forwarded to the TDM service layer, thus achieving the effects of simplifying network hierarchy and improving the bearing efficiency of TDM pipes for packet services.

From the description of the described embodiments, a person skilled in the art would be able to clearly understand that the method in the described embodiments may be implemented by using software and necessary general hardware platforms, and of course may also be implemented using hardware, but in many cases, the former is a better embodiment. Based on such understanding, the essence of technical solutions of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), which includes a number of instructions for enabling a terminal device (which may be a mobile phone, a computer, a server, or a network device, etc.) to perform the methods described in various embodiments of the present disclosure.

An apparatus for mapping and forwarding a packet service to a TDM service layer is further provided in the embodiments of the present disclosure. The apparatus is configured to implement the embodiments and preferred embodiments above, and what has been described above will not be described repeatedly herein. As used below, the term "module" may implement a combination of software and/or hardware of predetermined functions. Although the apparatus described in the following embodiments is preferably implemented in software, implementation in hardware or a combination of software and hardware is also possible and may be conceived.

An apparatus for mapping and forwarding a packet service to a TDM service layer is provided in embodiments of the present disclosure. The apparatus includes: a mapping module, configured to construct a service mapping and forwarding table between packet service identifiers and TDM connection identifiers in a time division multiplexing (TDM) network, wherein each of the TDM connection identifiers indicates a connection path between a source network node and a destination network node in the TDM network; and a forwarding module, configured to, when a packet service accesses the TDM network, map the packet service to a TDM service layer of the TDM network according to the service mapping and forwarding table, and forward the packet service via the connection path between the source network node and the destination network node.

It should be noted that, the modules above may be implemented by software or hardware, and the latter may be implemented in the following manner, but is not limited thereto. All the modules above are located in a same processor; or all the modules above are located in different processors in any arbitrary combination manner. In a practical implementation process, the module division of the apparatus for mapping and forwarding a packet service to a TDM service layer in the foregoing embodiment includes function division and naming division, and can be adjusted according to actual situations, as long as the specific steps of the method for mapping and forwarding a packet service to a TDM service layer can be implemented, which will not be described herein again.

The embodiments of the present disclosure further provide a computer-readable storage medium storing a computer program, wherein the computer program is configured to execute, when running, the steps in any one of the described method embodiments.

In an exemplary embodiment, the computer-readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic device, including a memory and a processor; the memory stores a computer program therein, and the processor is configured to execute the computer program, so as to implement the operations in any one of the method embodiments.

In an exemplary embodiment, the electronic device may further include a transmission device and an input/output device, wherein the transmission device is connected with the processor, and the input/output device is connected with the processor.

For specific examples in the present embodiment, reference can be made to the examples described in the described embodiments and exemplary embodiments, and which will not be repeated again herein.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

In order to enable those skilled in the art to better understand the technical solutions of the present disclosure, descriptions will be given below with reference to specific scenario embodiments.

### Scenario Embodiment I

The scenario embodiment of the present disclosure provides a method for mapping and forwarding a packet service to a TDM service layer, wherein the edge node of the TDM network collects the identifiers of the accessed packet service, or allocates the identifiers of the packet service by means of pre-configuration manner; then, complete matching of identifiers of the packet service between the source network node and the destination network node by means of a centralized or distributed protocol; calculate a TDM connection path based on the matching relationship, in a case where the connection path exists, reuse the connection identifier; otherwise, establish a TDM connection, thereby forming a service mapping and forwarding table between packet service identifiers of source and destination and the TDM connection identifiers. When a packet service accesses the TDM network, the packet service identifiers are identified at the source, the packet service with the specific identifier is mapped to the TDM service layer according to the service mapping and forwarding table. Based on the TDM connection, at the destination network node, the packet service with the specific identifier is demapped according to the service mapping and forwarding table, and is forwarded to the port with the specific identifier.

In the scenario embodiment of the present disclosure, the method for mapping and forwarding a packet service to a TDM service layer includes the following steps:

### Step 1. Global topology management

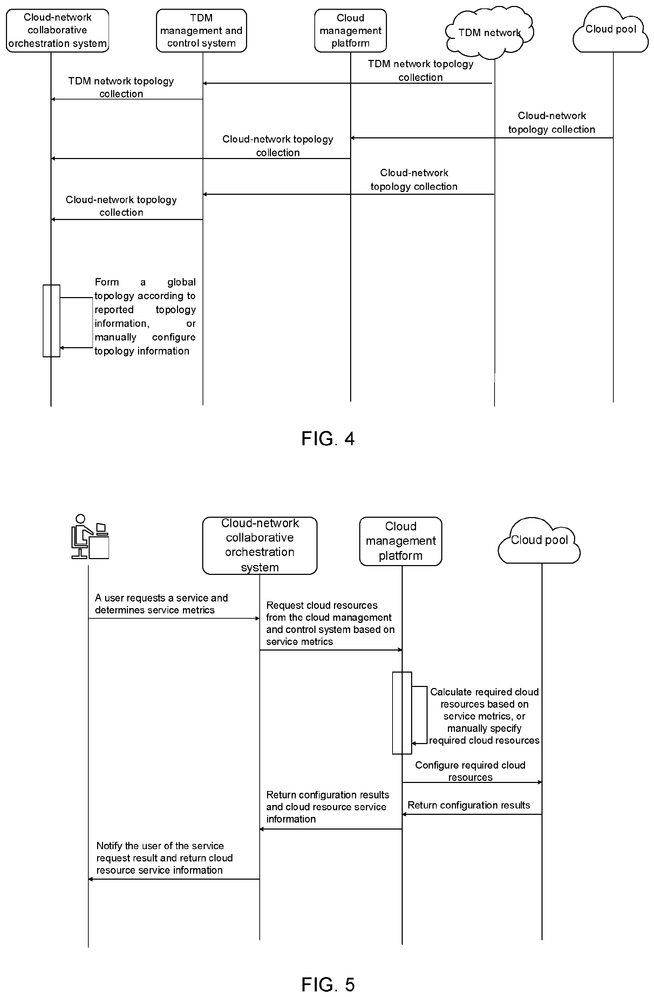

FIG. 4 is a schematic flowchart of global topology management according to a scenario embodiment of the present disclosure. As shown in FIG. 4, the cloud-network collaborative orchestration system forms a global topology based on the topology information reported by the TDM management and control system and the cloud management and control system; topology information may also be manually configured.

### 1) Cloud-Network Topology Resource Information Collection

The cloud-network collaborative orchestration system collects topology information between TDM network devices and customer edge (CE) devices, and topology information between TDM network devices and cloud gateways (GW). For example, information such as connected ports and the VLAN/MAC/IP thereof is collected through LLDP or Layer 3 routing protocols.

### 2) TDM network topology resource information collection

The TDM management and control system in each domain collects topological information within its own domain, while the cross-domain TDM management and control system collects topological information between domains.

In actual implementation, a management and control system may be used for centralized collection and management, or distributed routing protocols may be used for topology collection. In the scenario embodiment of the present disclosure, the management and control system is taken as an example.

### Step 2. User service request and customer service sensing

In the embodiment of the scenario of the present disclosure, the user service request is completed by an online management and control system. In actual implementation, the configuration may also be completed by means of offline contract agreements. FIG. 5 is a schematic flowchart of a user service request according to a scenario embodiment of the present disclosure. As shown in FIG. 5, the flowchart includes:

### 1) User service request

After a user purchases a service from an operator, the cloud-network collaborative orchestration system requests the cloud management and control system to allocate cloud pool resources according to the service metrics, so as to obtain service information of the cloud pool, such as IP addresses, port information of service, and geographical location information. The cloud-network collaborative orchestration system returns the service information of the allocated cloud pool resources to the user, and the user can then complete the relevant configuration.

### 2) Customer service sensing

The cloud-network collaborative orchestration system determines the ingress and egress of the TDM network based on the location information of the user and the location information of the cloud resource, and then requests, from the TDM management and control system according to the purchased service, related configurations of a network device interface, such as sub-ports and virtual routing and forwarding (VRF) identifier configuration ports, and enables the customer service sensing capability to acquire Layer 2/Layer 3/Layer 4 information in the sensing customer service.

### Step 3. Calculation of the service mapping and forwarding table

In the scenario embodiment of the present disclosure, the content of the service mapping and forwarding table may include at least one of the following: a TDM device identifier, a customer service identifier, and a connection identifier. In actual implementation, specific entries may be determined based on the purchased service or a combination of device capabilities.

In the scenario embodiment of the present disclosure, the service mapping and forwarding table can be generated by following ways: 1) calculating and generating the table according to the source and destination address information in a service flow; 2) calculating and generating the table according to the purchased service information; and 3) static configuration.

### 1) Calculating and generating the service mapping and forwarding table according to source and destination address information in a service flow

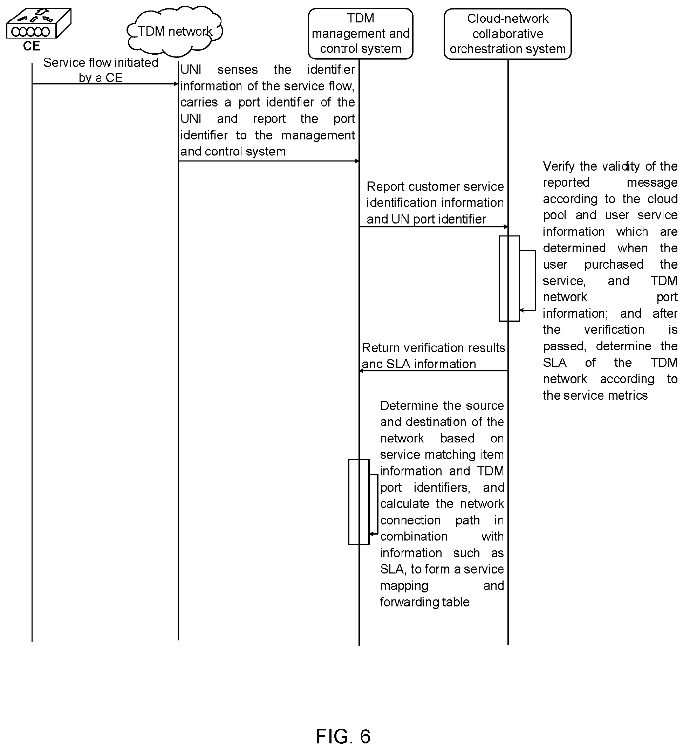

FIG. 6 is a schematic flowchart of a first method for generating a service mapping and forwarding table according to a scenario embodiment of the present disclosure, as shown in FIG. 6,
a UNI port of the TDM network senses the identifier information of the service flow, carries a port identifier (including a sub-port and/or a VRF identifier) of the user network interface (UNI), which are reported to the TDM management and control system, and subsequently reported to the cloud-network collaborative orchestration system (the cloud-network collaborative orchestration system is optional; the TDM management and control system can also be directly triggered to initiate a connection request).

The cloud-network collaborative orchestration system verifies the validity of the reported message according to the cloud pool and user service information which are determined when the user purchased the service, and the TDM network port information; and after the verification is passed, determines the SLA information of the TDM network according to the service metrics, and requests a connection from the TDM management and control system.

The TDM management and control system determines the source and destination of the network connection according to the identification information reported in the customer service flow, thereby determining the TDM device identifier and customer service identifier information in the customer service mapping and forwarding table.

When the source and destination span multiple domains, the cross-domain TDM management and control system sends the split source and destination and/or SLA information to the TDM management and control system of each domain to request connection path computation, and then performs path splicing to determine the connection identifier in the customer service mapping and forwarding table, thereby forming a complete customer service mapping and forwarding table. When the source and destination network nodes are within the same domain, the path computation process is similar to the above.

The management and control system may dynamically refresh the mapping and forwarding table based on the service address information.

In the scenario embodiment of the present disclosure, the centralized calculation is completed by the TDM management and control system. In actual implementation, a distributed protocol may also be used to complete the calculation of the service mapping and forwarding table. For example, after using a distributed routing protocol to match the customer service identifier, the routing controller (RC) or path computation element (PCE) in ASON may further be used to complete the connection computation.

### 2) Calculating and generating the service mapping and forwarding table according to the purchased service information

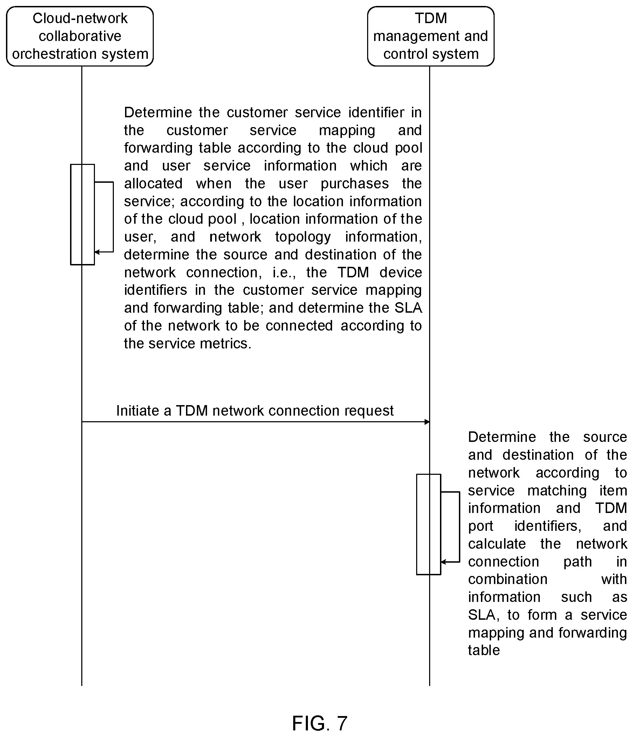

FIG. 7 is a schematic flowchart of a second method for generating a service mapping and forwarding table according to a scenario embodiment of the present disclosure, as shown in FIG. 7,

The cloud-network collaborative orchestration system determines the customer service identifier in the customer service mapping and forwarding table according to the cloud pool and user service information which are allocated when the user purchases the service; according to the location information of the cloud pool, location information of the user, and network topology information, determines the source and destination of the network connection, i.e., the TDM device identifiers in the customer service mapping and forwarding table; and determines The SLA of the TDM network according to the service metrics, and initiates a connection request to the TDM control system.

When the source and destination network nodes span multiple domains, the cross-domain TDM management and control system sends the split source network node and destination network node and/or SLA information to the TDM management and control systems of each domain to request a connection path calculation, and then performs path splicing to determine the connection identifier in the customer service mapping and forwarding table, thereby forming a complete customer service mapping and forwarding table. When the source network node and the destination network node are within the same domain, the path calculation process is similar to the above, which will not be described again. The management and control system may dynamically refresh the mapping and forwarding table based on the service information and the network topology information.

### 3) Static configuration

The cloud-network collaborative orchestration system can deliver the preset service mapping and forwarding table to the TDM management and control system. The cloud-network collaborative orchestration system or the user can synchronize or refresh the mapping and forwarding table.

**Table 1 is an example of a service mapping and forwarding table according to an embodiment of the present disclosure:**

| TDM device identifier | Connection | Customer service identifier | Remarks |
|---|---|---|---|
| Node identifier | | SVLAN | L2 layer information |
| | | CVLAN | |
| | | Source MAC | |
| | Connection identifier | Destination MAC | |
| Port/sub-port identifier | | Source IP | L3 layer information |
| | | Destination IP | |
| VRF identifier | | TCP port destination | L4 layer information |
| | | UDP port destination | |

### Step 4. Connection establishment and bandwidth adjustment

In the scenario embodiment of the present disclosure, packet service forwarding is differentiated into the following cases:
1) When no connection is available, a connection can be established: the cloud-network collaborative orchestration system performs service teardown and provisioning according to the service activation or deletion instructions issued by the service management platform. The service teardown and provisioning supports two schemes: hop-by-hop configuration and first-node configuration. In hop-by-hop configuration, the TDM management and control system directly issues service configuration instructions to all nodes along the service path. In the first-node configuration, the TDM management and control system issues configuration instructions only to the first node of the path, and then the forwarding plane completes service establishment, such as forwarding plane operations, administration, and maintenance (OAM), or resource reservation protocol (RSVP) or segment routing (SR), by means of control plane connection control signaling.
2) When a connection is available, bandwidth adjustment can be performed according to the service SLA requirements.

Bandwidth adjustment implementation solutions include a management/control centralized configuration scheme, a coordinated scheme between the management/control plane and the forwarding-plane OAM, etc. The management and control system can implement end-to-end service bandwidth adjustment by using one or a combination of these methods, depending on the forwarding plane's support condition. Management/control centralized configuration scheme: a management and control system issues a configuration to a node device on a service connection path by means of centralized control. Coordinated scheme between the management/control plane and the forwarding-plane OAM: a management and control system only issues configuration signaling to a connected first node, and completes service connection bandwidth adjustment by means of the OAM of the forwarding plane.

### Step 5. Service forwarding

When a packet service accesses the TDM network, the packet service identifier is identified at the source network node, and the packet service with the specific identifier is mapped to the TDM service layer according to the service mapping and forwarding table. Based on the connection with the TDM, at the destination network node, the packet service with the specific identifier is demapped according to the service mapping and forwarding table, and is forwarded to the port with the specific identifier. For example, an IMP mapping of an MTN/fgMTN/fgOTN/OSU, and a GFP-F mapping of an ODU both may support mapping from a packet to a TDM service layer.

In summary, the embodiments of the present disclosure provide a method for mapping and forwarding a packet service to a TDM service layer, which generates a mapping and forwarding table for packet services to the TDM service layer, and performs mapping and forwarding on the packet service identifiers according to the mapping and forwarding table. The present disclosure enables the mapping and forwarding of packet service identifiers to the TDM service layer according to the L2/L3 layer information of the packet services, which benefits from advantages brought by the rigid-pipeline of TDM, simplifies the network hierarchy for easier maintenance, and also enhances the carrying efficiency of TDM pipes for payload services.

The content above are only preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the protection scope of the present disclosure.

## Claims

1. A method for mapping and forwarding a packet service to a TDM service layer, comprising:
constructing a service mapping and forwarding table between packet service identifiers and TDM connection identifiers in a time division multiplexing (TDM) network, wherein each of the TDM connection identifiers indicates a connection path between a source network node and a destination network node in the TDM network; and
when a packet service accesses the TDM network, mapping the packet service to a TDM service layer of the TDM network according to the service mapping and forwarding table, and forwarding the packet service via the connection path between the source network node and the destination network node.

2. The method according to claim 1, wherein after forwarding the packet service via the connection path between the source network node and the destination network node, the method further comprises:
forwarding, by the destination network node, the packet service to a device with a specific identifier according to the service mapping and forwarding table.

3. The method according to claim 1, wherein the service mapping and forwarding table comprises at least one of following:
identifiers of a TDM network device;
the TDM connection identifiers; and
the packet service identifiers.

4. The method according to claim 3, wherein the identifiers of a TDM network device comprise at least one of following:
a network node identifier;
a port identifier of the TDM network device;
a sub-port identifier of the TDM network device; and
a virtual routing and forwarding (VRF) identifier of the TDM network device.

5. The method according to claim 3, wherein the packet service identifiers comprise at least one of following:
a server virtual local area network (SVLAN) identifier;
a customer virtual local area network (CVLAN) identifier;
a source/destination media access control (MAC) identifier;
a source/destination Internet protocol (IP) identifier;
a transmission control protocol (TCP) port identifier; and
a user datagram protocol (UDP) port identifier.

6. The method according to claim 1, wherein the constructing a service mapping and forwarding table between packet service identifiers and TDM connection identifiers in a time division multiplexing network comprises:
establishing a matching relationship between the source network node and the destination network node; and
obtaining the connection path according to the matching relationship to construct the service mapping and forwarding table.

7. The method according to claim 6, wherein the establishing a matching relationship between the source network node and the destination network node comprises:
determining the source network node and the destination network node according to the packet service identifiers of the source network node and the destination network node.

8. The method according to claim 6, wherein the establishing a matching relationship between the source network node and the destination network node comprises:
determining the source network node and the destination network node according to geographic location information where information of the packet service is located, and topology information of the TDM network.

9. The method according to claim 1, wherein the mapping the packet service to a TDM service layer of the TDM network according to the service mapping and forwarding table, and forwarding the packet service via the connection path between the source network node and the destination network node comprises:
identifying, by the source network node of the TDM network, the packet service identifiers, mapping the packet service with the specific identifier to the TDM service layer according to the service mapping and forwarding table, and forwarding the packet service to the destination network node via the connection path between the source network node and the destination network node.

10. The method according to claim 1, wherein the mapping the packet service to a TDM service layer of the TDM network according to the service mapping and forwarding table, and forwarding the packet service via the connection path between the source network node and the destination network node comprises:
in a case where the connection path indicated by a TDM connection identifier exists, adjusting a connection bandwidth of the TDM network according to a service level agreement (SLA) of the packet service; and
in a case where the connection path indicated by the TDM connection identifier does not exist, constructing a TDM connection path by configuring nodes of the TDM network.

11. A computer-readable storage medium, storing a computer program that, when executed by a processor, implements the method according to any one of claims 1 to 10.

12. An electronic device, comprising a memory, a processor, and a computer program stored in the memory and that, when executed by the processor, implements the method according to any one of claims 1 to 10.
